(19) Europäisches Patentamt
European Patent Office
Office européen des brevets

(11) **EP 2 434 701 A1**

(12) **EUROPEAN PATENT APPLICATION**

(43) Date of publication:
 **28.03.2012 Bulletin 2012/13**

(51) Int Cl.:
 ***H04L 12/56*** *(2006.01)*

(21) Application number: **10275099.9**

(22) Date of filing: **24.09.2010**

(84) Designated Contracting States:
 **AL AT BE BG CH CY CZ DE DK EE ES FI FR GB GR HR HU IE IS IT LI LT LU LV MC MK MT NL NO PL PT RO SE SI SK SM TR**
 Designated Extension States:
 **BA ME RS**

(71) Applicant: **BAE Systems PLC**
 **London SW1Y 5AD (GB)**

(72) Inventor: **The designation of the inventor has not yet been filed**

(74) Representative: **BAE SYSTEMS plc**
 **Group IP Department**
 **P.O. Box 87**
 **Warwick House**
 **Farnborough Aerospace Centre**
 **Farnborough**
 **Hampshire GU14 6YU (GB)**

(54) **Admission Control in a Self Aware Nework**

(57) A method of admission control in a Self Aware Network carrying at least one existing user (z) specifying at least one Quality of Service metric ($q_w$). The method includes receiving (202) a user request for admission of a connection from a source node to a destination node in the network specifying at least one Quality of Service metric ($q_v$). The source node then finds (203) paths ($P(s,d)$); creates (206) link Quality of Service matrices ($Q_w(i,j)$); sends (208) probe traffic over the network; and uses the traffic to obtain (210) a Quality of Service matrix ($\hat{q}'_w(i,j)$). The source node computes (212) estimated link Quality of Service matrices ($\hat{Q}_w(i,j)$) and computes (214) path Quality of Service matrices ($\hat{K}_w$) for the Quality of Service metrics, based on the estimated link Quality of Service matrices ($\hat{Q}_w(i,j)$). The user request is rejected or accepted (216, 218, 220) based on the path Quality of Service matrix.

Fig.2.

EP 2 434 701 A1

**Description**

The present invention relates to admission control in a Self Aware Network.

A Self Aware Network (SAN) is a Quality of Service (QoS) enabled network with enhanced monitoring and self improvement capabilities that use adaptive packet routing protocols, such as Cognitive Packet Network (CPN) and address QoS by using adaptive techniques based on online measurements. Further information on these types of networks and techniques can be found in, for example, E. Gelenbe "Steps toward self-aware networks", Communications of the ACM, July 2009., or E. Gelenbe, G. Sakellari, and M. D' Arienzo. Controlling Access to Preserve QoS in a Self-Aware Network, in Proceedings of the First IEEE International Conference on Self-Adaptive and Self-Organizing Systems (SASO), pages 205-213, Boston, MA, USA, 9-11 July 2007. IEEE Computer Society, Washington, DC, USA (the contents of which are hereby incorporated in their entirety). CPN is a distributed protocol that provides QoS-driven routing, in which users, or the network itself, declare their QoS requirements (QoS Goals) such as minimum delay, maximum bandwidth, minimum cost, and so on. It is designed to perform self-improvement by learning from the experience of smart packets, using random neural networks (RNN) with reinforcement learning (RL), and genetic algorithms.

CPN makes use of three types of packets: smart packets (SP) for discovery; source routed dumb packets (DP) to carry the payload, and acknowledgement (ACK) packets to bring back information that has been discovered by SPs, and is used in nodes to train neural networks. SPs are generated either by a user request to create a path to some CPN node, or by a user request to discover parts of the network state, including location of certain fixed or mobile nodes, power levels at nodes, topology, paths, and their QoS metrics. To avoid overburdening the system with unsuccessful requests or packets that are in effect lost, all packets have a life-time constraint based on the number of nodes visited.

Each node in the CPN acts as a storage area for packets and mailboxes (MBs) and also stores and executes the code used to route smart packets. Therefore, for each successive smart packet, each router executes the code, updates its parameters, and determines the appropriate outgoing link based on the outcome of this computation. RL is carried out using a QoS Goal, such as Packet Delay, Loss, Hop Count, Jitter, and so on. The decisional weights of an RNN are increased or decreased based on the observed success or failure of subsequent SPs to achieve the Goal. Thus, RL will tend to prefer better routing schemes, more reliable access paths to data objects, and better QoS. More analytically, when a Smart Packet arrives at its destination, an ACK is generated and heads back to the source of the request, following the reversed path of the SP. In each CPN node of the reversed path that the ACK packet visits, it updates the mailbox with the information it has discovered, and finally provides the source node with the successful path to the destination node. That route is used as a source route by subsequent DPs of the same QoS class having the same destination, until a newer and/or better route is brought back by another ACK. ACK messages also contain timestamp information gathered at each node back to the source, which, together with the one gathered by the smart packets on the same nodes, can be used to monitor the QoS metrics on a single link and/or partial or complete paths.

As far as the decision process is concerned, each node stores a specific RNN for each QoS class, and for each active source-destination pair. Each RNN node, which represents the decision to choose a given output link for a smart packet, has as many neurons as the possible outgoing links. Decisions are taken by selecting the output link $j$ for which the corresponding neuron is the most excited: $q_i \leq q_j$ for all $i = 1, \dots , n$, where n is the number of neurons (possible outgoing links). The state $q_i$ of the $i$th neuron in the network, represents the probability that the $i$th neuron is excited and therefore the probability that the $i$th outgoing link will be selected for the smart packet's routing. For $1 < i < n$ the state of the $i$-th neuron satisfies the following system of nonlinear equations:

$$q_i = \frac{\lambda^+(i)}{r(i) + \lambda^-(i)},$$

where

$$\lambda^+(i) = \sum_j q_j w_{ji}^+ + \Lambda_i \quad and \quad \lambda_-(i) = \sum_j q_j w_{ji}^- + \lambda_i,$$

where $w^+_{ji}$ is the rate at which neuron $j$ sends excitation spikes to neuron $i$ when $j$ is excited; $w^-_{ji}$ is the rate at which neuron $j$ sends inhibition spikes to neuron $i$ when $j$ is excited; and $r(i)$ is the total firing rate from the neuron $i$. For an n neuron network, the network parameters are those n by n weight matrices $W^+ = \{w^+(i, j)\}$ and $W^- = \{w^-(i,j)\}$ that need to be learned from input data.

As far as the learning process is concerned, CPN reinforcement learning changes neuron weights to reward or punish a neuron according to the level of goal satisfaction measured on the corresponding output. Each QoS class for each source-destination pair has a QoS goal G, which expresses a function to be minimized for example, Transit Delay, or Probability of Loss or Jitter, or a weighted combination and so on. The level of goal satisfaction is expressed by a reward. Given some goal G that a packet has to minimize, the reward R is formulated simply as R = 1/G. The RNN weights are updated based on a threshold $T$:

$$T_k = \alpha T_{k-1} + (1 - \alpha)R_k,$$

where $R_k$, k = 1, 2,... are successive measured values of reward R, and $\alpha$ is some constant ($0 < \alpha < 1$) that is used to tune the responsiveness of the algorithm: for instance $\alpha = 0.8$ means that on average, five past values of R are being taken into account.

Neurons are rewarded or punished based on the difference between the current reward $R_k$ and the last threshold $T_{k-1}$. So, if the most recent value of the reward, $R_k$, is larger than the previous value of the threshold $T_{k-1}$, then the excitatory weights going into the neuron that was the previous winner are significantly increased (in order to reward it for its new success), and also a small increase of the inhibitory weights leading to other neurons. If the new reward is not greater than the previous threshold, all excitatory weights leading to all neurons are moderately increased, except for the previous winner, and the inhibitory weights leading to the previous winning neuron are significantly increased, in order to punish it for not being very successful this time. So, if $r_i$ is the firing rate before the update takes place for every neuron $i$:

$$r_i = \sum_1^n [w^+(i, m) + w^-(i, m)],$$

$T_{k-1}$ is first computed and then the network weights are updated as follows for all neurons $i \neq j$ :

—If $T_{k-1} \leq R_k$
　　—$w^+(i, j) \leftarrow w^+(i, j) + R_k,$
　　—$w^-(i, j) \leftarrow w^-(i, j) + R_k/(n-2)$, if $k \neq j$ .

—Else
　　—$w^+(i, j) \leftarrow w^+(i, j) + R_k /(n-2)$, if $k \neq j$ ,
　　—$w^-(i, j) \leftarrow w^-(i, j) + Rk.$

Since the relative size of the weights of the RNN, rather than the actual values, determine the state of the neural network, all the weights are renormalize by carrying out the following operations. First for each $i$ compute

$$r_i^* = \sum_1^n [w^+(i, m) + w^-(i, m)],$$

and then renormalize the weights with:

$$w^+(i, j) \leftarrow w^+(i, j) * (r_i/r_i^*)$$

$$w^-(i,j) \leftarrow w^-(i,j) * (r_i/r^*_i)$$

Finally, the probabilities, $q_i$, are computed using the nonlinear iterations described above. The largest of the $q_i$s is again chosen to select the new output link used to send the smart packet forward. This procedure is repeated for each smart packet, for each QoS class, and each source-destination pair. The SAN can specify its own overall criteria, and in a certain sense the admission control does exactly that, since users are only admitted if their needs can be met, so that the SAN has an overriding goal of satisfying users as best as it can. On the other hand, individual users can also specify their own criteria, and then the SAN monitors the users and the network resources so as to satisfy the users as well as possible.

A measurement-based AC algorithm for SANs is disclosed by the present inventors in the "Controlling Access to Preserve QoS in a Self-Aware Network" paper referenced above. The method is based on measurements of the QoS metrics on each link of the network. This does not require any special mechanism since, as stated above, the SAN collects QoS information on all links and paths that the SPs have explored and on all paths that any user is using in the network. Furthermore, since different QoS metrics are specified for different users according to their needs, the SAN can collect data for the different QoS metrics that are relevant to the users themselves.

The AC mechanism described in the "Controlling Access to Preserve QoS in a Self-Aware Network" reference is centralised, which raises security issues as there is a single point where matrices used by the algorithm are stored and if this fails then the system collapses. Also, in the method users have to wait for a relatively long time in order to be served.

Embodiments of the present invention are intended to address at least some of the problems discussed above.

According to a first aspect of the present invention there is provided a method of admission control in a Self Aware Network, the network carrying at least one existing user (z), each said existing user specifying at least one Quality of Service metric ($q_w$) expressed as a Quality of Service constraint ($C_w(z)$), the method including:

receiving a user (u) request for admission of a connection from a source node (s) to a destination node (d) in the network carrying a traffic rate (X), the request specifying at least one Quality of Service metric ($q_v$) expressed as a Quality of Service constraint ($C_v(u)$);

the source node then performing steps of:

finding a set of paths (P(s,d)) between the source node and the destination node;

creating link Quality of Service matrices ($Q_w(i,j)$) for all links (i,j) in the set of paths and the Quality of Service metrics ($q_w$, $q_v$) of the at least one existing user (z) and the user (u) making the request;

sending probe traffic over the network;

using the probe traffic to obtain a Quality of Service matrix ($q^{\wedge'}_w(i,j)$) for the links (i,j) and for the Quality of Service metrics (w) of the at least one existing user (z) and the Quality of Service metric (v) of the user (u) making the request;

computing estimated link Quality of Service matrices ($Q^\wedge_w(i,j)$) for the links (i, j) and for the Quality of Service metrics (w) of the at least one existing user (z);

computing path Quality of Service matrices ($K^\wedge_w$) for the Quality of Service metrics (w) of the at least one existing user (z) and the Quality of Service metric (v) of the user (u) making the request, based on the estimated link Quality of Service matrices ($Q^\wedge_w(i,j)$), and

rejecting or accepting the user request based on the computed path Quality of Service matrices.

The user request may be accepted if:

the path Quality of Service matrix ($K^\wedge_v(s,d)$) of the user (u) making the request satisfies the Quality of Service constraint ($C_v(u)$) of the user (u) making the request, and

the path Quality of Service matrix ($K^\wedge_w(s',d')$) of the at least one existing user (z) satisfies the Quality of Service constraint ($C_w(z)$) of the at least one existing user ($z$),

otherwise the user request may be rejected.

The method may include the source node receiving Quality of Service information from at least one other node in the network and using that received information in order to compute at least the estimated link Quality of Service matrices ($Q^\wedge_w(i,j)$).

The method may include the source node transmitting Quality of Service information to at least one other node in the network, the at least one other node using the transmitted Quality of Service information in a local admission control method. The source node may transmit the information to all other nodes in the network. The source node may transmit the information to at least one node in the network, the at least one node being selected in a random or pseudorandom manner.

The source node may store Quality of Service information, such as average end-to-end delay and/or jitter of data packets. The source node may store this information in a Dumb Packet Route Repository that comprises data regarding a route followed by each data packet transmitted from source nodes in the network and reported back by an acknowledgment packet. The QoS information may include average link QoS information about the links visited by the data packets originating from source nodes in the network. The average link QoS information may be computed from QoS information regarding each hop of the path from a header of each said acknowledgement packet. The QoS information may be updated when a data packet acknowledgment returns to the source node. The QoS information may be collected in an exponential average manner over a predetermined period of time.

The method may include determining the at least one Quality of Service metric ($q_v$) in the user request from information not explicitly included in the request. For instance, the method may determine the least one Quality of Service metric ($q_v$) by looking at an identity of the user (e.g. type of application, type of user, or a network use purpose of the user's request), or security or monetary cost. Additionally, information regarding delay, jitter, packet loss and/or bandwidth may be used to determine the Quality of Service metrics.

According to another aspect of the present invention there is provided a computer program element comprising: computer code means to make the computer execute a method substantially as described herein. The element may comprise a computer program product.

According to another aspect of the present invention there is provided a device configured to execute a method substantially as described herein. The device may be configured as an SAN node. According to a further aspect of the present invention there is provided a network comprising a plurality of such nodes.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:

Figure 1 is a schematic illustration of an example SAN;

Figure 2 is a flowchart showing steps performed by an embodiment of the AC method, and

Figures 3 to 14 are graphs illustrating experimental results for embodiments of the AC method.

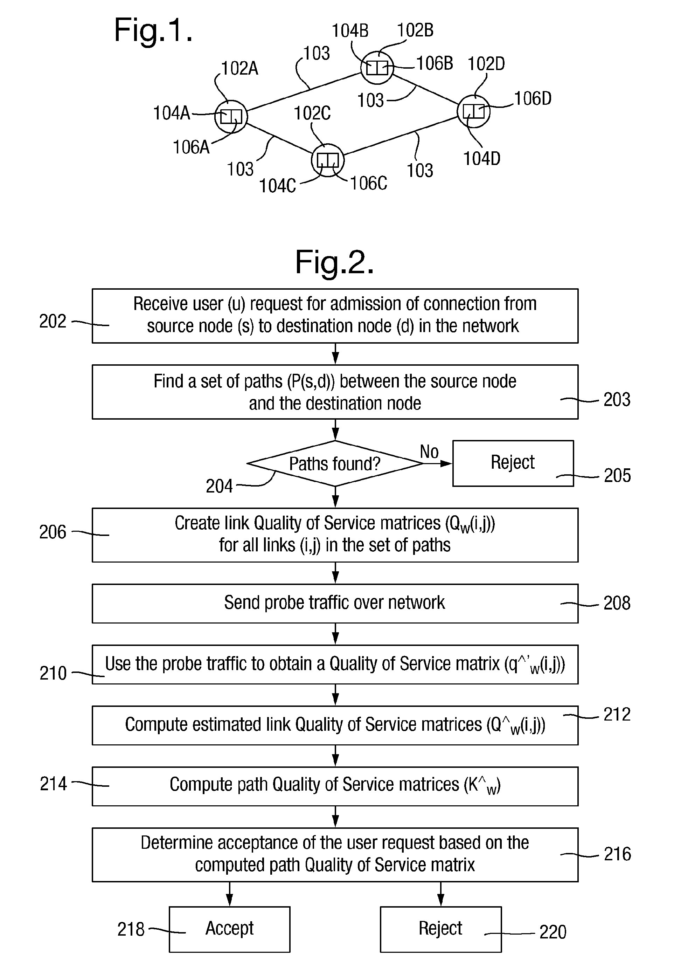

Figure 1 shows a schematic illustration of a SAN. The example SAN includes four nodes 102A - 102D connected to each other, directly or indirectly, by links 103, although it will be appreciated that the number and arrangement of nodes and links are illustrative only. Each node 102A - 102D includes a processor 104A - 104D and memory 106A - 106D, which can be configured to execute code performing an AC function as described herein.

The AC method used in embodiments of the invention broadly includes three stages. In the first, the identification stage, the network identifies the quality criteria that a new user has and translates them to QoS metrics (if the user does not specify them himself). In the second, the probing stage, the AC method estimates the impact of the new flow by probing the network. Finally, in the third, the decision stage, the AC method searches for a feasible path that can accommodate the new call by considering the impact of that new flow on the network without affecting the quality of formerly accepted flows.

In the decentralised version of the AC method described herein each input node bases its decisions on restricted information. Instead of collecting QoS information about all links to a central data centre where the decision is being made, each input node collects its personal information, about specific links, and decides independently.

The admission control system bases the decision on the limited information that it has from the links that are affected by the probe traffic and from the existing flows of that input node. More specifically, the estimated link QoS matrices of the probing stage are the input of the generalised Floyd-Warshall's algorithm (as described in, for example, Floyd, R.W., 1962, Algorithm 97: Shortest path, Comm. ACM 5, 6 (June), 345). The output of this algorithm is path QoS matrices that provide the "best QoS value" for every path between every pair of vertices, using any intermediate vertices. For example, in case of the delay, loss or variance metric by "best value" it is meant the minimum value, while for bandwidth or security it is the maximum value, etc. From those path matrices the algorithm checks whether the best QoS values of the new users and all existing users of the node correspond to the required ones. If all of them are satisfied then the new user is accepted into the network.

In order to gather link QoS information at each source node the ability of CPN to provide end-to-end QoS information is used. In CPN, each source contains a table, called DPRR (Dumb Packet Route Repository), which keeps the route that was followed by each data packet and was reported back by the corresponding acknowledgment (ACK) packet. This table has been modified to also keep QoS information, such as average end-to-end delay and jitter of the data packets. Since the header of each ACK packet contains QoS information from each hop of the path, another table, LINK DPRR, is also created to store average link QoS information about the links visited by the packets originating from each source. Both tables are updated every time a data packet's acknowledgment returns to the source. QoS values are collected in an exponential average manner, over a given time window, so as to limit the effect of short-term fluctuations.

Being able to specify a user's QoS metric is in some cases extremely useful and desirable. For instance, in networks for battlespace communication and information services, or in mass media networks, most of the users know exactly the bounds of QoS that they need in order to have a good service. However, in other, everyday networks, there might be users who may not know what kind of service they need and do not know how their needs translate in terms of QoS values. In those cases the SAN can specify its own overall criteria so that it will satisfy users as best it can. This ability was further extended by embodiments of the AC method so that the SAN can also provide the users with the appropriate QoS values.

Thus, in some embodiments in the first stage of the self-adaptive algorithm, when a user requests to enter the network and has not specified any QoS requests, the network estimates its needs, by looking at the user's identity (e.g. the type of the application, the type of user, or the purpose that the user wants to use the network for), and provides the necessary QoS values required to achieve the required functionality of the user's application based on minimal QoS needs that are well known (e.g. voice over IP, or real-time video streams). For the numerical values of the QoS metrics according to the medium used (data, audio, or video) and the specific user application, values of the ITU-T International Telecommunication Union standardization can be used, where the minimal QoS needs of delay, variance of delay, packet loss, and data rates, or data amounts, are specified in order for an application to work efficiently. So, for example, if a user wants to make an ATM transaction he/she will need less than a two-second one-way delay, at least 10KB bandwidth and no loss, while for a voice conversation over the network the delay must be less than 150ms, jitter less than 1 ms, packet loss less than 3% and the bandwidth, if not defined otherwise, should be between 4-64Kbps.

In some cases further investigations can be carried out so that all parameters that affect a connection are identified, and the restrictions of the quality metrics could be appointed to each user. For instance, QoS metrics such as security or monetary cost could be considered. In some cases these four metrics (delay, jitter, packet loss, and bandwidth) provide good bounds that can guarantee service quality, especially in multimedia traffic networks.

In the case where not all users are equal, and the traffic in the network must be prioritized, and each new user can be prompted to answer a series of questions that clarify a user's identity in order for them to be categorized in a priority category. For example apart from "what type of application?" or "what medium will be used?", questions like: "is the user an enterprise or individual?" "is the user a regular user of the network?", "what is the user's rank?", "how long will the user need to use the network?" and so forth, can lead to categorizing the user according to the priority their traffic should have in the network. When a new user is identified as the highest priority he/she should immediately be accepted into the network, although the QoS levels of all the existing users must be fulfilled. Therefore, the entrance of a high priority user could lead to the breach of the current QoS contracts between the network and the existing users. In order to deal with this issue, many algorithms reserve resources for high priority users, running the risk of having unused and wasted resources. An alternative solution could be that when we are in need of resources in order to serve a high priority user, one or some of the lowest priority users already in the network, could be rejected so that all other users will meet their QoS goals.

Considering a network graph $G(N, E)$ with nodes N, $n = |N|$, and the set $E$ of directional links $(i, j)$, where $i, j \in N$. The CPN algorithm explores $G(N, E)$ and collects QoS data about the parts of the network that are currently being used, or which have been explored by SPs. It is assumed that this data is available in one or more locations in the form of n x n link QoS matrices $Q_v$, for every distinct QoS metric v = 1, ... m, where m is the total number of QoS metrics that may concern a user. The elements of $Q_v$ are:

$Q_v(i, j) = r$, where $r \geq 0$ is a real number representing the QoS of link $(i, j)$ that has been measured at some recent enough time, and

$Q_v(i,j) = unknown$, if $i$ and $j$ are not directly connected, or if either an SP has not explored the link for the QoS metric $v$, or if this happened so long ago that the value could be inaccurate.

Every time a new user requests to enter the network from a source s to a destination d, with total traffic rate $X$, and specific QoS constraints, probe traffic of traffic rate equal to a small percentage of $X$ is sent from s to d for a small time interval t. Then, new QoS data are collected and new QoS matrices, $q^{\wedge}_w(i,j)$, are created for each QoS metric of interest, including the new users', and for all links $(i, j)$. Some links may not be concerned with the probe traffic so for that link it is taken that $q^{\wedge}_w (i,j) = 0$. The path that the probe packets will follow is the one that the SPs have chosen as more appropriate in order to satisfy the QoS needs of the new flow. It is very likely to also be the path that will be followed after the new user's full traffic is inserted. Finally, an estimation of the link QoS values of all metrics is calculated and stored in the gathering point in the form of link QoS matrices:

$Q^{\wedge}_w(i, j) = Q_w(i, j) + X q^{\wedge}_w (i, j)$, for all concerned links, or

$Q^{\wedge}_w(i,j) = Q_w(i, j)$, for unconcerned links.

This estimation is based on the fact that every QoS metric can be considered as a value that increases as the traffic load increases. The addition of a new connection will increase the load of the paths it may be using, and therefore it is assumed that the value taken by the QoS metrics will increase. For example, delay increases as the network traffic load increases. Considering some link (i, j), a small increase, x, in the load that is obtained in a controlled manner, for example, by sending probe packets at rate x, generates an estimate of the manner in which the QoS metric, q, varies around the current load point, Y:

$$q^{\wedge\prime} = (q(Y + x) - q(Y)) / x \qquad (1)$$

The impact of a new flow with total traffic rate $X$ can then be evaluated by using the estimate and the measured derivative from (1):

$$q^{\wedge}(Y + X) = q(Y) + q^{\wedge\prime}X \qquad (2)$$

without having to know the initial load Y.

Here the known Taylor rule for continuous and differentiable functions that are close to a point x is being used. The function f (x) can be approximated as $f(x + y) \sim f(x) + y f'(x)$. It is recognized that this is an approximation, and an estimate of the error is: $error \sim y^2 f''(x)/2$. This is included in the error estimate in some of the measurements. This estimate may be optimistic or pessimistic. However, it is likely that the path that CPN will select for the probe traffic, because it provides the most favourable impact on current flows, and because it satisfies the QoS needs of the new flow, is also likely to also be the best path in terms of actual observed QoS after the new user's full traffic is inserted.

A major advantage of this computation is that, contrary to the prior measurement-based AC schemes that use probing, it is not required to send the probe packets at the same rate as the new call's requested rate. It is then possible to have an accurate estimation by sending at much lower rates. In this way the probing process has no significant impact on the network's congestion. Obviously, the more probe packets we send, the more accurate the information that the source gathers will be. However, a large number of probe packets may contribute to congestion in addition to the congestion caused by data traffic.

Also, the longer the probing procedure lasts, the more accurate the measurements will be, but then a user might be required to wait for unacceptably long time before the admission decision. The optimal values for probing rates and times will depend on the overhead due to probing.

It is assumed that the users may be concerned with m distinct QoS metrics $q_v e R$, $v = 1, ...m$, that are specified in terms of QoS constraints [$q_v$ e $C_v(u)$ for each user u], where $C_v(u)$ c R is typically an interval of acceptable values of the QoS metric *v* for user *u*. The AC method will be detailed in terms of forwarding packets from some source s to a destination d. However, the approach can be generalized to the case where u is requesting some service S.

From the link matrices $Q_v$ of the previous stage it is possible to compute:

— The set of known (explored) paths P(s, d) from s to d, and
— The *path QoS matrices* $K_v$, where $K_v(s, d)$ is the known best value of the QoS metric *v* for any path going from s to d if such a path exists and if the links on the path have known entries in the link QoS matrices. Other entries in $K_v$ are set to the value "unknown."

By "best value" it is meant that several paths may exist for the source-destination pair *(s, d)*, but $K_v(s, d)$ will store, for instance, the smallest known delay for all paths going from s to d if $q_v$ is the delay metric. A description of how the path QoS matrices are computed from the link matrices will be given below.

Figure 2 illustrates steps in an example embodiment of the AC method. It will be appreciated that the steps are exemplary only and in other embodiments some of the steps may be re-ordered or omitted. The skilled person will also appreciated that the method can be implemented using various programming techniques and data structures.

At step 202 data describing a new user u requesting admission for a connection is received at source node s in the network for data to be transferred from the source node to a destination d, carrying a traffic rate *X,* and with a QoS constraint $q_v(u)$. The network is also currently carrying at least one other user z, generically represented by some QoS constraint $q_w(z)$. The following steps are typically performed in a decentralised manner at a processor 104 of a node 102 using locally-available information.

At step 203 a set of paths *P(s, d)* is sought. If it is empty, SPs are sent over the network to discover paths. At step 204 a question is asked whether the paths have been found. If not then the request is rejected at step 205; otherwise the current network is monitored and at step 206, the $Q_w(i, j)$ matrices for all discovered links and all QoS metrics (including w = *v*) are created, and then at step 208 probe traffic is sent at rate x over the network.

At step 210 the probe traffic is used to obtain $q^{\wedge'}_w(i, j)$ for each QoS metric *w* of interest, including w = *v*, and for all links *(i, j)*. Some links may not be concerned by the probe traffic so for those links it is taken that $q^{\wedge'}_w(i, j) = 0$. The path that the probe packets will follow, will be the one that the SPs have chosen as more appropriate so that it satisfies the QoS needs of the new flow. It is therefore very likely to also be the path that will be followed after the new user's full traffic is inserted.

Next, at step 212 the following estimation is computed:

$$Q^{\wedge}_w(i, j) = Q_w(i, j) + Xq^{\wedge'}_w(i, j) \quad (3)$$

for all concerned links and all QoS metrics. For unconcerned links it is taken that $Q^{\wedge}_w(i, j) = Q_w(i, j)$.

At step 214, $K^{\wedge}_w$ is computed from $Q^{\wedge}_w$ (to be detailed below) for all the QoS metrics of interest, including *v*.

At step 216 if $K^{\wedge}_v(s, d)$ e $C_v(u)$ AND $K^{\wedge}_w(s', d')$ e $C_w(z)$ for all other current users z with source-destination pair (s', d') and QoS metric $q_w$ e $C_w(z)$, then the request of use u is accepted at step 218, otherwise the request is rejected (step 220).

The known Warshall's algorithm determines for each i, j e N, whether there is a path from node *i* to node *j* by computing the Boolean matrix *K,* the transitive closure of the graph's adjacency matrix Q, in less than $n^3$ Boolean operations.

$$K = \bigcup_{k=1}^{n} Q^k \qquad (4)$$

or

$$K^n[i, j] = K^{n-1}[i, j] \bigvee \left( K^{n-1}[i, n] \bigwedge K^{n-1}[n, j] \right), \qquad (5)$$

where $K^1[i, j] = Q[i, j]$ and the matrix elements are treated as Boolean values with V being the logical OR and A the logical AND. The known Floyd's algorithm extends Warshall's algorithm to obtain the cost of the "smallest cost path" between any pair of vertices in the form of a real-valued matrix:

$$K^n[i, j] = min\{K^{n-1}[i, j], (K^{n-1}[i, n] + K^{n-1}[n, j])\}. \ (6)$$

Thus, relating this to the AC method, Floyd-Warshall's technique can be used to construct $K_v$ from $Q_v$, and hence $K^{\wedge}_v$ from $Q^{\wedge}_v$, if the QoS metric $q_v$ is additive, so that $K_v(i, y)$ is the smallest value of the QoS metric among all known paths from $i$ to $j$. Delay and the variance of delay, are both additive metrics. Although loss rate is not additive (it is sub-additive in the sense that the path loss rate is smaller than the loss rate of individual links in the path), and the number of lost packets is an additive metric. Note that $K_v(i, j)$ are all non-negative quantities.

For non-additive metrics the inventors developed a generalization of the Floyd-Warshall. The matrix $Q_v$ mentioned above, whose entries are the measured QoS values $r \geq 0$ over links $(i, j)$ whenever such a link exists, or otherwise have the value "unknown." The matrix $K_v$, which is calculated as shown in the following, provides the "best QoS value" for every path between every pair of vertices (i, j).

$$K_v = \bigoplus_{k=1}^{n} [Q_v]^k \qquad (7)$$

or

$$K_v^n[i, j] = K_v^{n-1}[i, j] \otimes (K_v^{n-1}[i, n] \oplus K_v^{n-1}[n, j]), \qquad (8)$$

where in (8) $K^1_v = Q_v$, and in (7) the operator (+) between two real valued matrices B, C ($D_v = Bv \ (+) \ C_v$) is defined as $D_v(i, j) = (x)^n_{t=1} [B_v(i, t) \ (+) \ C_v(t, j)]$. The operator (+) between two QoS parameters depends on the QoS metric that is being considered and can be the addition (+) for delay and variance, the minimum (min) for bandwidth and so on. The (x) is also an operator that depends on the specific QoS metric q, and selects the best value among the elements on which it operates. For example, in the case of the delay, loss, or variance metrics it will obtain the minimum value, while for bandwidth or security it will select the maximum value, for all paths going from $i$ to $j$.

In order to evaluate the decentralised AC method, experiments were conducted in a real, 46-node testbed, wherein all links had the same capacity (10*Mbits=s*) and all users had the same QoS requirements: *delay* $\leq$ *150ms, jitter* $\leq$ 1*ms,* and *packet loss* $\leq$ 5 %. There were 7 Source-Destination (S-D) pairs that correspond to 7 users. After making a request, the user waited for a random time *W* and then make another request. The random waiting time *W* was set among requests in order to have different rate for the arrivals. *W* was chosen to be uniformly distributed in the range of values [0; 15] seconds. The probing rate was set at 40% of the user's rate and the probing duration at 2s. When a call was accepted, the source generates UDP traffic of 1 *Mbps* constant bit rate that lasted for 600s. Thus, the load on the system was constantly increasing at least until the 600*th* second. Since the capacity of each link was 10*Mbps,* this meant that the network became highly congested very quickly. Each experiment lasted for 15*min* (900s) and was conducted 5 times. The results presented herein are the average values of those runs.

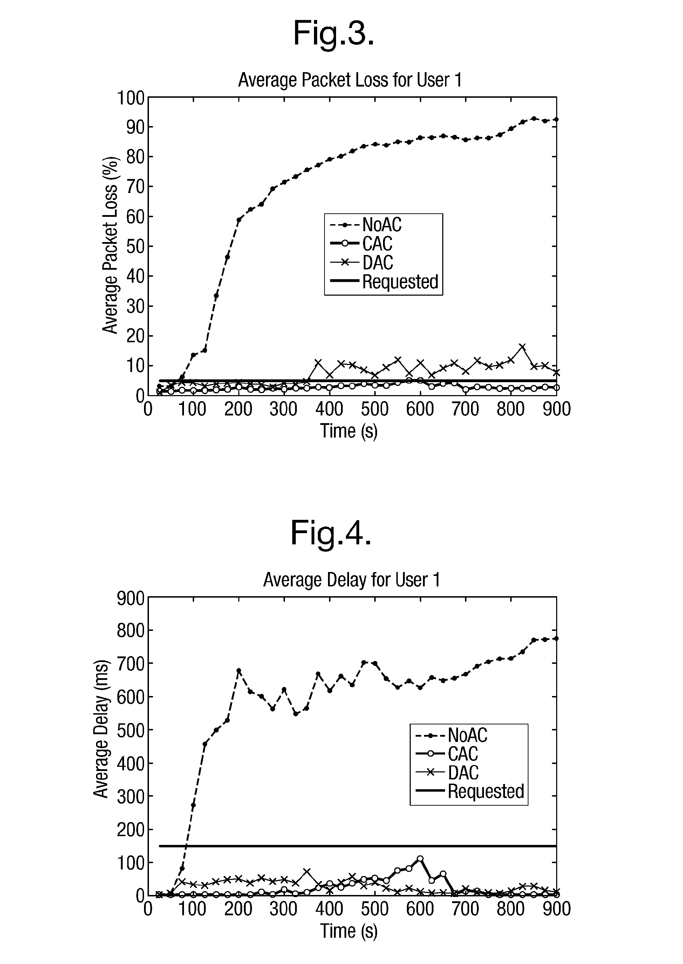

The experiments covered three cases: (i) The Admission Control disabled, (ii) the centralised AC method enabled (CAC), and (iii) the decentralised AC enabled (DAC). Figures 3, 4 and 5 compare the average packet loss, delay and jitter of a user in the network in all three cases. It was observed that in both cases where the AC algorithm is enabled, the satisfaction of the user is much higher than when there is no AC. By satisfaction it is meant the percentage of time throughout the experiment duration that all three QoS criteria, that user *D*1 has specified, are met. In the case of the centralised AC user *D*1 was satisfied 81:09% of the time, contrary to the decentralised AC mechanism where the user was satisfied 18:92% of the time. When the AC was disabled, this percentage dropped to 8:11%. It is noted that even if the percentage of the decentralised AC was low the user's QoS values were much closer to the requested ones than when there was no AC.

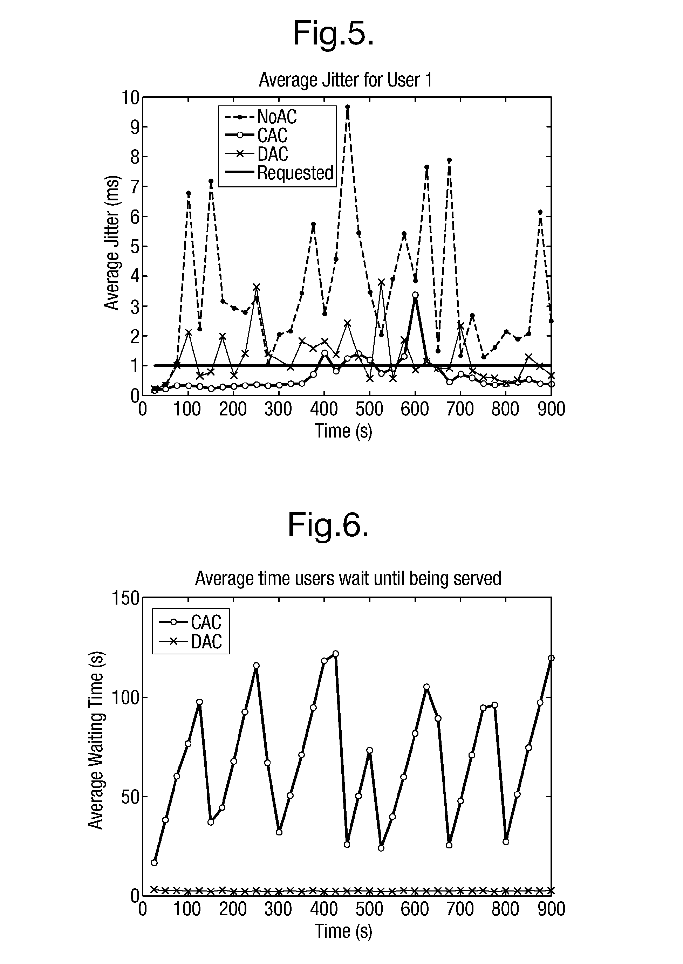

Figure 6 shows the average time a user had to wait until it was accepted into the network, when the AC is enabled. In the case of the centralised AC the users queue at the central point while in the decentralised version there are individual "request queues" at each input node. The average waiting time over all these queues are presented in the Figure. When the AC was disabled, users did not wait in a queue, but were served as quickly as possible. In the experiments, a user had to wait on average 68:11 s when the AC procedure was centralised and only 2:49s when the AC decision is taken independently at each input node.

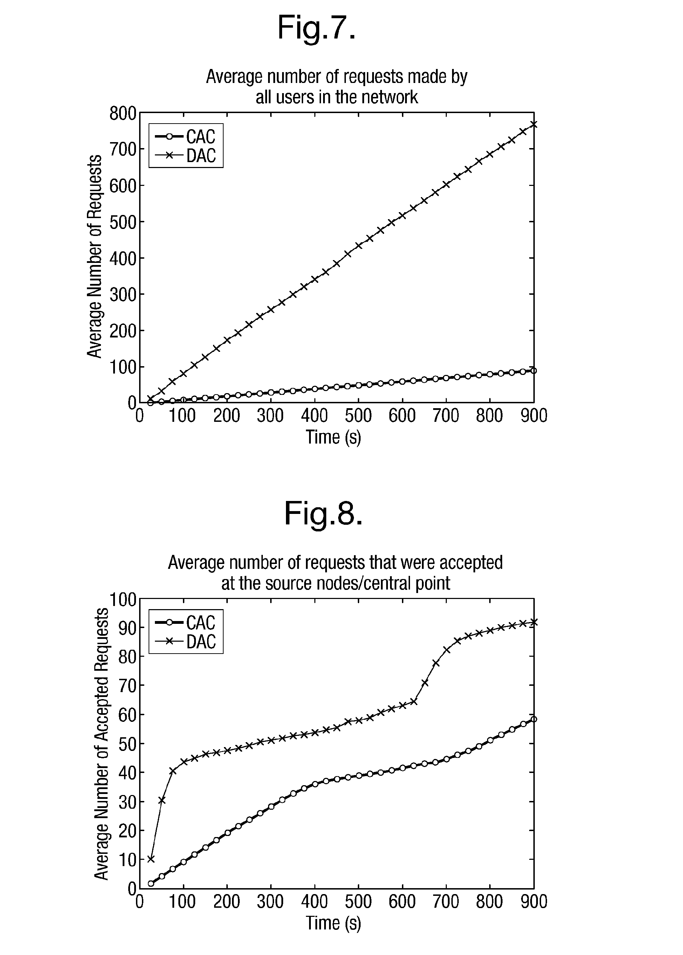

Figures 7 and 8 report the number of requests made in the whole network and the number of accepted requests respectively, when the AC schemes are enabled. It is observed that with the decentralised algorithm the number of requests served and accepted into the network was higher. This is due to the fact that the users do not need to wait in a single queue at the central point and are therefore served much faster.

In embodiments of the method, each source node probes the network independently, which can cause false estimations and additional traffic to the network. The experimental results showed that by decentralising the AC algorithm the network does not get over-congested and the QoS values are kept close to the required ones, but, as far as the satisfaction of the users is concerned, it is less likely that the user-specified QoS requirements will be met. A token passing mechanism could be used during the probing stage to address this.

In order to further improve the performance of the decentralised AC, coordination mechanisms between the input nodes can be used. The admission decision of the decentralised algorithm is based on the limited personal QoS information that each input node has from the links that are affected by the probe traffic and from the existing flows initiated by that node. In the experiments performed, it has been observed that the satisfaction of the accepted users in the decentralised version can be worse than in the centralised one. This is mainly because each input node has limited information and does not know the QoS values of all the links like in the centralised version. Also, multiple probes are in the network an the estimation of the algorithm is not accurate. Therefore, coordinating mechanisms can be used in order for all the input nodes to have more "global" information about the links of the network.

In one embodiment, the coordinating mechanism exchanges messages between all the input nodes, i.e. all the input nodes have more or less the same information about the links of the network that are being used. Every time a node measures link information it sends those values along with the time it measured them to all of the other input nodes. When a node wants to make a decision it bases it on the most recent link values taken from all the nodes.

Having nodes exchange messages every time they measure a different link QoS value introduces additional overhead in the network. Therefore an alternative lighter coordination mechanism can be used. In this mechanism, every time an input node has new QoS measurements instead of sending them to every source node in the network it randomly chooses one and only sends it to it.

The experiments relating to the coordination mechanisms were also performed, having the same configuration as in the experiments described above. These experiments covered three cases: (i) the decentralised AC with no coordination between the input nodes (DAC), (ii) the decentralised AC with full coordination between the input nodes (DAC-Full), and (iii) the decentralised AC with random coordination between the input nodes (DAC-Rand).

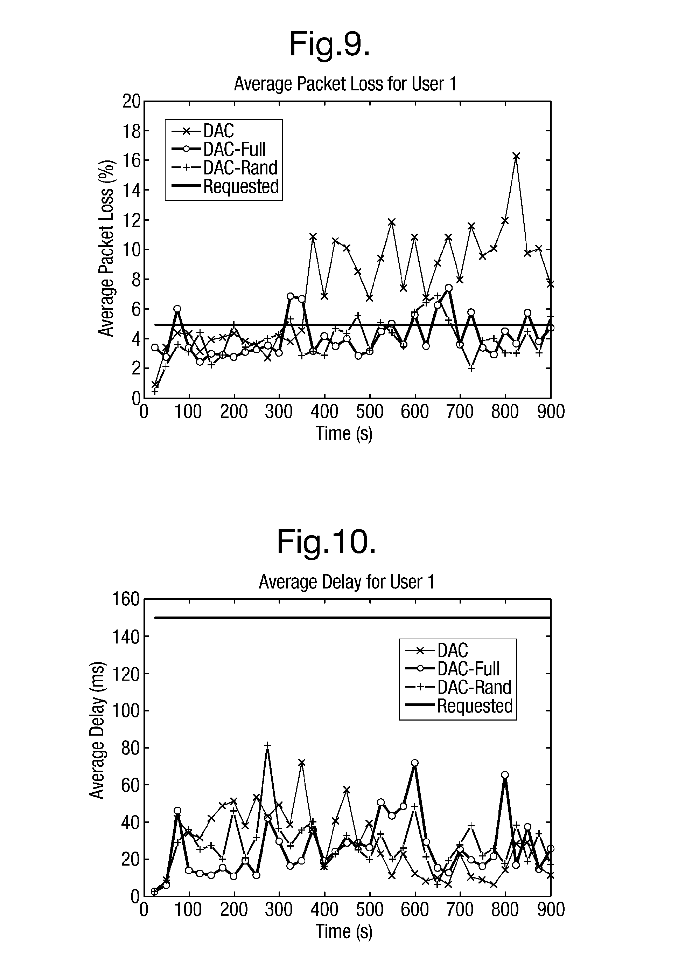

From Figures 9, 10 and 11 it can be observed that the satisfaction of the user improves when coordination was used. As before, in the case of the decentralised AC user $D1$ was satisfied 18:92% of the time. When full coordination was applied, the user satisfaction increased to 27:03% and when random coordination was applied, the satisfaction surprisingly increased further to 40:54%. Additionally, the percentage of the satisfaction was still low, mainly because of the jitter restriction. This may be because the CPN was used with only delay as QoS goal and therefore CPN chooses the smallest delay paths while the AC algorithm looks at delay jitter and loss. When using a combinatory QoS goal the results will improve.

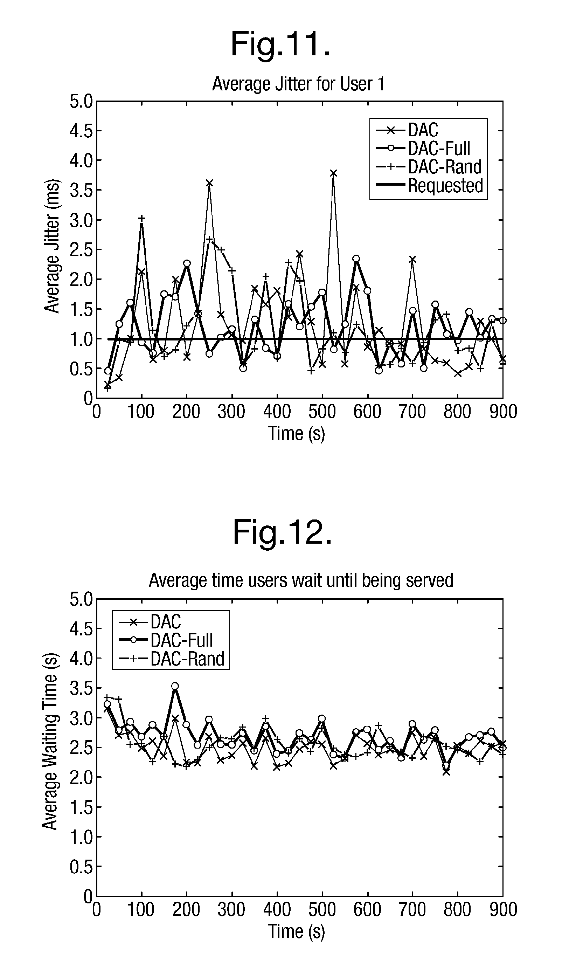

Figure 12 shows that when there is coordination, the waiting time is slightly longer due to the message exchanges. More specifically, for DAC the average waiting time was 2:49s, while for the fully coordinated DAC it was 2:69s and for the randomly coordinated was 2:56s.

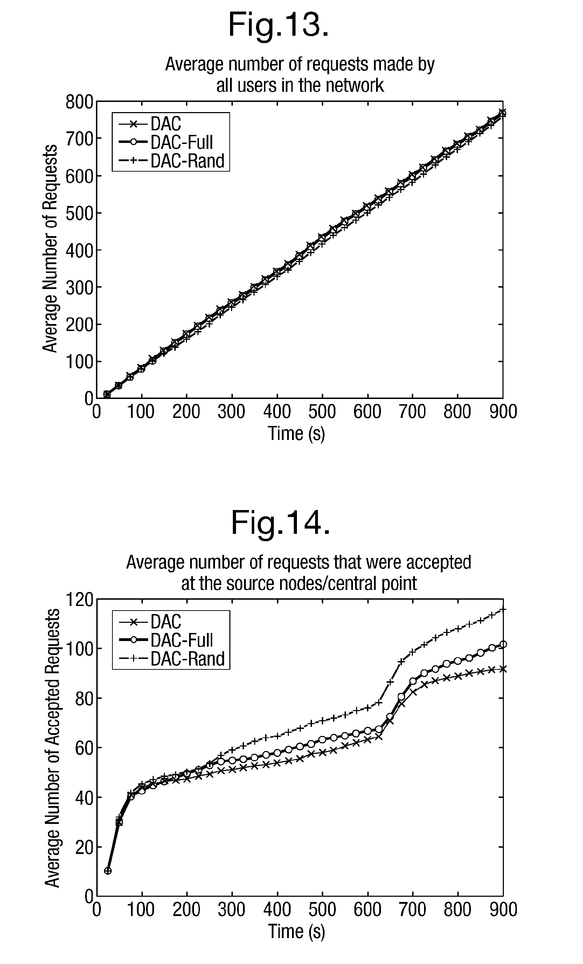

Figure 13 shows that almost the same number of requests being made in all three cases, while Figure 14 shows that by having coordination more users are accepted into the network. So, when coordination is used not only is the satisfaction improved, but the number of users accepted into the network also increases. This is because with the coordination the input nodes have more information about the network status. Additionally, with the random coordination even more users were accepted since fewer messages are exchanged between the input nodes.

It will be appreciated that other coordination mechanisms between the decision (input) nodes can be used. For instance, when the network is close to congestion admission control could be serialised by a mechanism. For example, an auctioning mechanism could be used to supervise the decision stage of the AC method, which will choose the less demanding of the requests.

**Claims**

1. A method of admission control in a Self Aware Network, the network carrying at least one existing user (z), each said existing user specifying at least one Quality of Service metric ($q_w$) expressed as a Quality of Service constraint ($C_w(z)$), the method including:

    receiving (202) a user (u) request for admission of a connection from a source node (s) to a destination node (d) in the network carrying a traffic rate (X), the request specifying at least one Quality of Service metric ($q_v$) expressed as a Quality of Service constraint ($C_v(u)$);

the source node then performing steps of:

finding (203) a set of paths (P(s,d)) between the source node and the destination node;

creating (206) link Quality of Service matrices ($Q_w(i,j)$) for all links (i,j) in the set of paths and the Quality of Service metrics ($q_w$, $q_v$) of the at least one existing user (z) and the user (u) making the request;

sending (208) probe traffic over the network;

using the probe traffic to obtain (210) a Quality of Service matrix ($q^{\wedge'}_w(i,j)$) for the links (i,j) and for the Quality of Service metrics (w) of the at least one existing user (z) and the Quality of Service metric (v) of the user (u) making the request;

computing (212) estimated link Quality of Service matrices ($Q^\wedge_w(i,j)$) for the links (i, j) and for the Quality of Service metrics (w) of the at least one existing user (z);

computing (214) path Quality of Service matrices ($K^\wedge_w$) for the Quality of Service metrics (w) of the at least one existing user (z) and the Quality of Service metric (v) of the user (u) making the request, based on the estimated link Quality of Service matrices ($Q^\wedge_w(i,j)$), and

rejecting or accepting (216, 218, 220) the user request based on the computed path Quality of Service matrices.

2. A method according to claim 1, wherein the user request is accepted if:

the path Quality of Service matrix ($K^\wedge_v(s,d)$) of the user (u) making the request satisfies the Quality of Service constraint ($C_v(u)$) of the user (u) making the request, and

the path Quality of Service matrix ($K^\wedge_w(s',d')$) of the at least one existing user (z) satisfies the Quality of Service constraint ($C_w(z)$) of the at least one existing user (z).

3. A method according to claim 1 or 2, wherein the source node (s) receives Quality of Service information from at least one other node (102) in the network and uses that received information in order to compute (212) at least the estimated link Quality of Service matrices ($Q^\wedge_w(i,j)$).

4. A method according to any one of the preceding claims, wherein the source node (s) transmits Quality of Service information to at least one other node (102) in the network, the at least one other node using the transmitted Quality of Service information in a local admission control method.

5. A method according to claim 4, wherein the source node (s) transmits the Quality of Service information to all other nodes (102) in the network.

6. A method according to claim 4, wherein the source node (s) transmits the Quality of Service information to at least one node (102) in the network, the at least one node being selected in a random or pseudorandom manner.

7. A method according to any one of the preceding claims, wherein the source node (s) stores Quality of Service information, such as average end-to-end delay and/or jitter of data packets, in a Dumb Packet Route Repository that comprises data regarding a route followed by each data packet transmitted from source nodes in the network and reported back by an acknowledgment packet.

8. A method according to claim 7, wherein the stored Quality of Service information includes average link Quality of Service information about the links visited by the data packets originating from the source node.

9. A method according to claim 8, wherein the average link Quality of Service information is computed from Quality of Service information regarding each hop of the path from a header of each said acknowledgement packet.

10. A method according to claim 8, wherein the Quality of Service information is updated when a data packet acknowledgment returns to the source node (s).

11. A method according to any one of claims 8 to 11, wherein the Quality of Service information is collected in an exponential average manner over a predetermined period of time.

12. A method according to any one of the preceding claims, further including determining the at least one Quality of

Service metric ($q_v$) relating to the user request from information not explicitly included in the user request.

13. A computer program element comprising: computer code means to make the computer execute a method according to any one of the preceding claims.

14. A device (102) configured to execute a method according to any one of claims 1 to 12.

15. A Self Aware Network comprising a plurality of devices (102A - 102D) according to claim 14.

# Fig.1.

# Fig.2.

202 — Receive user (u) request for admission of connection from source node (s) to destination node (d) in the network

Find a set of paths (P(s,d)) between the source node and the destination node — 203

Paths found? — 204 — No → Reject — 205

206 — Create link Quality of Service matrices ($Q_w(i,j)$) for all links (i,j) in the set of paths

Send probe traffic over network — 208

210 — Use the probe traffic to obtain a Quality of Service matrix ($q^{\wedge'}_w(i,j)$)

Compute estimated link Quality of Service matrices ($Q^{\wedge}_w(i,j)$) — 212

214 — Compute path Quality of Service matrices ($K^{\wedge}_w$)

Determine acceptance of the user request based on the computed path Quality of Service matrix — 216

218 — Accept          Reject — 220

# Fig.3.

Average Packet Loss for User 1

# Fig.4.

Average Delay for User 1

# Fig.5.

Average Jitter for User 1

# Fig.6.

Average time users wait until being served

# Fig.7.

**Average number of requests made by
all users in the network**

# Fig.8.

**Average number of requests that were accepted
at the source nodes/central point**

# Fig.9.

**Average Packet Loss for User 1**

# Fig.10.

**Average Delay for User 1**

# Fig.11.

**Average Jitter for User 1**

Legend:
- —×— DAC
- —○— DAC-Full
- —+— DAC-Rand
- —— Requested

Y-axis: Average Jitter (ms)
X-axis: Time (s)

# Fig.12.

**Average time users wait until being served**

Legend:
- —×— DAC
- —○— DAC-Full
- —+— DAC-Rand

Y-axis: Average Waiting Time (s)
X-axis: Time (s)

# Fig.13.

Average number of requests made by
all users in the network

# Fig.14.

Average number of requests that were accepted
at the source nodes/central point

Europäisches
Patentamt

European
Patent Office

Office européen
des brevets

# EUROPEAN SEARCH REPORT

Application Number

EP 10 27 5099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GEORGIA SAKELLARI ET AL: "A multiple criteria, measurement-based admission control mechanism for Self-Aware Networks", COMMUNICATIONS AND NETWORKING IN CHINA, 2008. CHINACOM 2008. THIRD INTERNATIONAL CONFERENCE ON, IEEE, PISCATAWAY, NJ, USA, 25 August 2008 (2008-08-25), pages 1060-1064, XP031364982, ISBN: 978-1-4244-2373-6 * the whole document * ----- | 1-15 | INV. H04L12/56 |
| X | Sakellari G et al: "A Distributed Admission Control Mechanism for Multi-Criteria QoS", , 26 August 2010 (2010-08-26), pages 1-5, XP002626700, Retrieved from the Internet: URL:http://san.ee.ic.ac.uk/publications/AC -Globecom2010.pdf [retrieved on 2011-03-07] * the whole document * ----- | 1-15 | |
| X | Sakellari G: "A Decentralised, Measurement-based Admission Control Mechanism for Self-Aware Networks", , 10 May 2010 (2010-05-10), pages 1-6, XP002626701, Retrieved from the Internet: URL:http://san.ee.ic.ac.uk/publications/AC -ISCIS2010.pdf [retrieved on 2011-03-07] * the whole document * ----- | 1-15 | TECHNICAL FIELDS SEARCHED (IPC) H04L |

The present search report has been drawn up for all claims

| Place of search | Date of completion of the search | Examiner |
|---|---|---|
| Berlin | 7 March 2011 | Tous Fajardo, Juan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. GELENBE.** Steps toward self-aware networks. *Communications of the ACM,* July 2009
- Controlling Access to Preserve QoS in a Self-Aware Network. **E. GELENBE ; G. SAKELLARI ; M. D' AR-IENZO.** Proceedings of the First IEEE International Conference on Self-Adaptive and Self-Organizing Systems (SASO. IEEE Computer Society, 09 July 2007, 205-213
- **FLOYD, R.W.** Algorithm 97: Shortest path. *Comm. ACM,* June 1962, vol. 5 (6), 345